# DEMANDE DE BREVET EUROPEEN

(11) **EP 2 278 627 A1**
(43) Date de publication de la demande: **26.01.2011**
(21) Numéro de dépôt: 10170653.9
(22) Date de dépôt: 23.07.2010
(51) Int. Cl.: H01L 31/042

(54) **Localisation automatique de modules photovoltaïques dans un champ photovoltaïque**

(30) Priorité: 23.07.2009 FR 0955144
(71) Demandeur: Photowatt International S.A., 38300 Bourgoin-Jallieu (FR)
(72) Inventeur: Allandrieu, Frantz, 01800 Saint Maurice de Gourdans (FR); Aurousseau, Valery, 38110 St Clair de la Tour (FR); Dumas, Philippe, 38890 Saint Chef (FR)
(74) Mandataire: Maureau, Philippe

(57) **Abrégé**

La présente invention se rapporte à un module photovoltaïque (1) comprenant :
- des moyens de télécommunications conçus pour recevoir au moins un signal d'entrée provenant d'au moins une source et émettre au moins un signal de sortie encodant au moins des informations d'identification ;
- des moyens de traitement de chaque signal d'entrée agencés pour identifier chaque source émettant des données d'identification et pour attribuer au module photovoltaïque des coordonnées (x, y) représentatives de la localisation dudit module au sein d'un site d'implantation comportant une pluralité de modules photovoltaïques semblables ;
les coordonnées (x, y) étant attribuées, lorsque le module photovoltaïque (1) est disposé au sein du site d'implantation, en fonction d'un ensemble de caractéristiques de chaque signal d'entrée comprenant au moins les données d'identification de chaque source identifiée.

La présente invention concerne également un procédé d'attribution de coordonnées à un module photovoltaïque (1) dans un champ photovoltaïque.

## Description

La présente invention se rapporte à un module photovoltaïque, à un ensemble de modules photovoltaïques et à un procédé d'attribution de coordonnées à un module photovoltaïque représentatives de la localisation dudit module.

Au sens de la présente invention, un module photovoltaïque est un ensemble de cellules photovoltaïques reliées entre elles électriquement. Un tel module photovoltaïque peut être appelé panneau solaire photovoltaïque. Un ensemble de modules photovoltaïques est généralement destiné à former une unité de production d'électricité directement à partir du rayonnement solaire et peut être appelé champ photovoltaïque. De tels ensembles sont traditionnellement installés sur des toitures, des terrasses ; il existe également des ensembles de modules photovoltaïques installés sur de vastes étendues et comportant un nombre très important, jusqu'à plusieurs milliers, de modules photovoltaïques.

Lorsqu'une défaillance se produit dans un champ photovoltaïque, une opération de maintenance est nécessaire. Traditionnellement, un opérateur doit alors déterminer, dans un premier temps, la position physique du module photovoltaïque défectueux au sein du champ photovoltaïque en testant chacun des modules avant de procéder à l'opération de maintenance. Pour effectuer cette opération, il doit accéder à l'ensemble des modules photovoltaïques dont l'accès peut être plus ou moins difficile suivant leur emplacement.

Il existe des systèmes automatisés capables de mesurer un état de fonctionnement d'un module photovoltaïque mais de tels systèmes ne permettent pas une localisation physique du module photovoltaïque testé.

Afin de localiser physiquement des modules photovoltaïques d'un champ photovoltaïque, une solution connue consiste à repérer manuellement les modules photovoltaïques lors de leur installation grâce, par exemple, à un dispositif portable fourni à l'installateur: un tel repérage manuel peut s'avérer long et des erreurs d'attribution des coordonnées peuvent être générées.

La présente invention a pour objet de remédier en tout ou partie aux différents inconvénients cités précédemment.

A cet effet, la présente invention se rapporte à un module photovoltaïque comprenant :
- des moyens de télécommunications conçus pour recevoir au moins un signal d'entrée provenant d'au moins une source émettant des données d'identification et émettre au moins un signal de sortie encodant au moins des informations d'identification ;
- des moyens de traitement de chaque signal d'entrée agencés pour identifier chaque source et pour attribuer au module photovoltaïque des coordonnées (x, y) représentatives de la localisation dudit module au sein d'un site d'implantation comportant une pluralité de modules photovoltaïques semblables disposés selon un arrangement ou matrice à au moins deux dimensions, les coordonnées comprenant au moins une première coordonnée (x) représentative d'un rang du module selon une première dimension de l'arrangement et une seconde coordonnée (y) représentative d'un rang du module selon une seconde dimension de l'arrangement ou matrice ;
les moyens de traitement étant agencés pour mesurer une caractéristique de chaque signal d'entrée reçu afin de déterminer la distance entre ledit module et chaque source identifiée ; et attribuer des coordonnées (x, y) au module, en fonction des distances des sources identifiées et d'un ensemble de caractéristiques de chaque signal d'entrée comprenant au moins les données d'identification de chaque source identifiée et les coordonnées (x,y) des sources identifiées. ;

La présente invention se rapporte également à un champ photovoltaïque comprenant une pluralité de modules photovoltaïques conformes à l'invention, disposés sensiblement selon une matrice, dans lequel les informations d'identification de chaque module photovoltaïque constituent des données d'identification pour chaque autre module photovoltaïque.

Ainsi, un module photovoltaïque selon la présente invention, installé au sein d'un champ photovoltaïque selon l'invention peut être localisé physiquement grâce à ses coordonnées représentatives de sa position sur le site d'implantation. Les coordonnées sont attribuées automatiquement, sans intervention d'un opérateur puisque chaque module photovoltaïque communique avec les autres modules photovoltaïques du champ photovoltaïque pour attribuer les coordonnées de chaque module. En effet, en émettant des informations d'identifications, chaque module photovoltaïque selon l'invention constitue une source émettant des données d'identification pour chaque autre module photovoltaïque qui est alors en mesure de s'attribuer des coordonnées grâce à ses moyens de traitement. Un module photovoltaïque selon l'invention permet d'éviter à un opérateur d'effectuer des manipulations sur chaque module installé pour attribuer ses coordonnées.

Enfin, Les coordonnées attribuées à chaque module photovoltaïque d'un champ photovoltaïque selon l'invention sont dynamiques et peuvent évoluer en fonction des modifications apportées au champ photovoltaïque : lors du déplacement d'un module photovoltaïque, du retrait ou de l'ajout d'un module photovoltaïque, l'ensemble des coordonnées peut être modifié automatiquement.

La mesure des différentes distances permet une localisation relative de chaque module photovoltaïque, au moins de chaque module photovoltaïque adjacent, au sein d'un champ photovoltaïque avec précision, facilitant l'attribution des coordonnées par les moyens de traitement qui disposent ainsi de données supplémentaires.

Dans un mode de réalisation de l'invention, la caractéristique mesurée est la puissance de chaque signal d'entrée reçu.

Dans une autre forme de réalisation de l'invention, les moyens de télécommunications comportent, d'une part, une ligne électrique destinée à relier des modules photovoltaïques d'un champ photovoltaïque et, d'autre part, des moyens de transmission et/ou de réception d'impulsions électromagnétiques sur ladite ligne électrique.

Dans une réalisation particulière de l'invention, les coordonnées (x, y) déterminées par les moyens de traitement sont encodées dans les informations d'identification dudit module. Un système centralisé peut facilement récupérer les coordonnées encodées dans les informations d'identification de chaque module photovoltaïque afin d'afficher l'ensemble de ces informations.

Selon une caractéristique particulière de l'invention, un identifiant unique est encodé dans les informations d'identification.

Dans un mode de réalisation de l'invention, le module photovoltaïque comprend en outre des moyens d'initialisation conçus pour attribuer des coordonnées initiales (x₀, y₀) prédéterminées audit module. Les moyens d'initialisation permettent d'attribuer des coordonnées initiales à un module photovoltaïque choisi parmi les modules photovoltaïques d'un champ photovoltaïque selon l'invention. Les moyens d'initialisation permettent également de lever des conflits lorsque deux ou plusieurs modules photovoltaïques peuvent prétendre à avoir les mêmes coordonnées : c'est par exemple le cas lorsqu'aucun module photovoltaïque n'a de coordonnée attribuée ou lorsque l'installateur installe le premier module photovoltaïque d'un champ photovoltaïque.

Avantageusement alors, les moyens d'initialisation sont agencés pour attribuer des coordonnées initiales (x₀, y₀) prédéterminées lorsque le signal d'entrée dudit module ne comporte pas de donnée d'identification provenant d'une source identifiée. Ainsi, lorsque le premier module photovoltaïque d'un champ photovoltaïque est installé ou activé, celui-ci est en mesure de s'attribuer des coordonnées en l'absence de donnée d'identification.

Dans un mode de réalisation de l'invention, chaque signal d'entrée et/ou chaque signal de sortie est un signal radioélectrique HF, VHF, UHF ou SHF. Ainsi, les moyens de télécommunications sont adaptés pour émettre des données sur de grandes distances. De tels moyens de télécommunications permettent également, le cas échéant, de mesurer précisément les distances entre les sources identifiées et le module photovoltaïque en mesurant la puissance du signal d'entrée (la puissance est alors la caractéristique mesurée). De tels moyens de télécommunications sont faciles à mettre en oeuvre et peut coûteux.

Dans un mode de réalisation de l'invention, le module photovoltaïque comprend en outre des moyens de stockage des coordonnées (x, y), notamment une mémoire non volatile. Le stockage des coordonnées en mémoire non volatile permet en particulier au module photovoltaïque de conserver ses coordonnées en l'absence d'alimentation électrique. Cela permet également de procéder à l'installation d'un champ photovoltaïque sur plusieurs jours.

Selon une caractéristique particulière de l'invention, les moyens de télécommunications sont électriquement alimentés. En particulier, les moyens de télécommunications peuvent être alimentés par une partie de l'énergie électrique produite par le module photovoltaïque : dès lors que le module photovoltaïque reçoit un rayonnement solaire les moyens de télécommunications peuvent émettre et recevoir des signaux. Lorsqu'un opérateur procède à l'installation dudit module, celui-ci est en mesure de s'attribuer automatiquement des coordonnées. Il n'est pas nécessaire que l'installateur effectue une opération sur le module photovoltaïque pour lui attribuer des coordonnées.

La présente invention concerne également un Champ photovoltaïque comprenant une pluralité de modules photovoltaïques selon l'invention, disposés selon un arrangement ou matrice à au moins deux dimensions.

La présente invention concerne également un Procédé d'attribution de coordonnées (x, y) à un module photovoltaïque représentatives de sa localisation au sein d'un arrangement ou matrice de modules photovoltaïques à au moins deux dimensions., les coordonnées comprenant au moins une première coordonnée (x) représentative d'un rang du module selon une première dimension de l'arrangement et une seconde coordonnée (y) représentative d'un rang du module selon une seconde dimension de l'arrangement ou matrice, comprenant les étapes suivantes :
a) réceptionner au moins un signal d'entrée provenant d'au moins une source identifiée jouxtant ledit module photovoltaïque et déterminer les données d'identification de ladite source identifiée ;
b) mesurer une caractéristique de chaque signal d'entrée reçu afin de déterminer chaque distance entre ledit module et chaque source identifiée,
c) attribuer des coordonnées (x, y) au module, en fonction des distances des sources identifiées et d'un ensemble de caractéristiques de chaque signal d'entrée comprenant au moins les données d'identification de chaque source identifiée et les coordonnées (x,y) des sources identifiées.

Ainsi, la mise en oeuvre du procédé selon l'invention permet d'attribuer automatiquement des coordonnées à chaque module photovoltaïque constitutif d'un champ photovoltaïque.

Selon un mode de mise en oeuvre particulier du procédé de l'invention, l'étape c) d'attribution des coordonnées (x, y) au module photovoltaïque comprend, dans le cas ou au moins deux sources correspondant à d'autres modules photovoltaïques sont repérées, une détermination des coordonnées (xi, yi) du module photovoltaïque parmi les autres modules photovoltaïques situés à la plus courte distance et disposé au rang le plus faible selon la première dimension de l'arrangement ou matrice.

Avantageusement, si un module photovoltaïque de coordonnée (xi+1, yi-1) est détecté à une distance sensiblement égale à celle du module de coordonnées (xi, yi) situé dans la colonne de plus faible numéro parmi les autres modules photovoltaïques situés à la plus courte distance classée, alors les moyens de traitement attribuent les coordonnées (xi+1, yi) au module photovoltaïque ; sinon : - si un module photovoltaïque de coordonnée (xi, yi-1) est détecté à une distance supérieure au module de coordonnées (xi, yi) situé dans la colonne de plus faible numéro parmi les autres modules photovoltaïques situés à la plus courte distance classée, alors les moyens de traitement attribuent les coordonnées (xi, yi+1) au module photovoltaïque ; sinon, les moyens de traitement attribuent les coordonnées (xi+1, yi) au module photovoltaïque.

Si une seule source est détectée, correspondant ayant des coordonnées attribuées (xi, yi), les moyens de traitement attribuent les coordonnées (xi+1 ; yi) au module photovoltaïque ;

Dans un mode de mise en oeuvre de l'invention, la caractéristique mesurée est la puissance de chaque signal d'entrée reçu.

Dans un mode de mise en oeuvre de l'invention, le procédé comprend une étape d'initialisation consistant à attribuer des coordonnées initiales (x₀, y₀) à un premier module photovoltaïque.

Avantageusement alors, l'étape d'initialisation est effectuée avec une balise de télécommunications.

Alternativement, l'étape d'initialisation est constituée par le fait que si aucune source n'a pu être détectée, le dispositif de traitement attribue les coordonnées par défaut correspondant à un premier module photovoltaïque du champ photovoltaïque (x₀, y₀) ;

Selon un mode de mise en oeuvre particulier de l'invention, le procédé comprend en outre une étape de centralisation consistant à collecter par une base de centralisation des informations d'identification émises. La collecte permet de centraliser les informations d'identification de chaque module pour les stocker dans une mémoire non volatile. Ces informations d'identification collectées peuvent ainsi être utilisées ultérieurement lors d'un traitement informatique de données. En particulier, les coordonnées attribuées de chaque module photovoltaïque peuvent être utilisées par la base de centralisation pour assurer l'adressage et la communication de données entre la base et les modules photovoltaïques du champ photovoltaïque.

Selon un autre mode de mise en oeuvre particulier de l'invention, le procédé comprend en outre une étape de visualisation consistant à transmettre des informations d'identification attribuées à chaque module photovoltaïque à un dispositif de visualisation, notamment un ordinateur ou un dispositif à affichage graphique. Ainsi, le dispositif de visualisation est en mesure d'illustrer la position physique de chaque module photovoltaïque dans le champ photovoltaïque.

Avantageusement, Si aucune coordonnée ne peut être déterminée ou si les coordonnées déterminées sont déjà attribuées, alors les moyens de traitement attribuent une valeur aux coordonnées du module, par exemple (0,0), signifiant que des coordonnées ne sont pas attribuables ou qu'il existe un conflit entre plusieurs modules photovoltaïques.

L'invention sera mieux comprise à l'aide de la description détaillée qui est exposée ci-dessous en regard des dessins annexés dans lesquels :
La Figure 1 est une vue schématique d'un module photovoltaïque selon l'invention ;
la Figure 2 est un vue schématique de modules photovoltaïques en cours d'installation sur un site d'implantation.

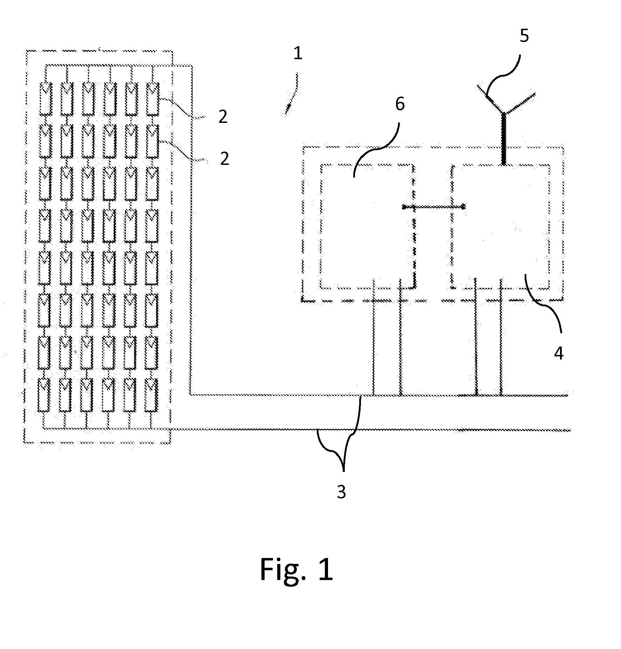

Selon un premier mode de réalisation, un module photovoltaïque 1, représenté sur la Figure 1, comporte une pluralité de cellules photovoltaïques 2, comparables à un panneau photovoltaïque classique, permettant de délivrer un courant électrique dans les câbles électriques 3 lorsque les cellules photovoltaïques 2 reçoivent un rayonnement solaire. Le module photovoltaïque 1 selon l'invention comporte en outre des moyens de télécommunications constitués, par exemple, d'un dispositif de télécommunications 4 muni d'une antenne 5. Le dispositif de télécommunications 4 peut être électriquement alimenté par les câbles électriques 3. Le dispositif de télécommunications 4 et son antenne 5 sont conçus pour émettre et recevoir au moins un signal d'entrée et au moins un signal de sortie radioélectriques haute Fréquence (HF - 3 MHz à 30 MHz), très haute fréquence (VHF - 30 MHz à 300 MHz), ultra haute fréquence (UHF - 300 MHz à 3 GHz) ou super haute fréquence (SHF - 3 GHz à 30 GHz). Par exemple, le dispositif de télécommunications 4 est conçu pour émettre ou recevoir un signal HF.

Chaque signal d'entrée reçu par le dispositif de télécommunications 4 est transmis à un dispositif de traitement 6. Le dispositif de traitement 6 attribue des coordonnées au module photovoltaïque 1 en fonction d'un ensemble de caractéristiques de chaque signal d'entrée reçu puis renvoi au dispositif de télécommunications 4 des données à encoder dans un signal de sortie. Ce signal de sortie comporte au moins des informations d'identification encodées, comme par exemple un numéro de série unique et éventuellement des coordonnées (x, y) représentatives de la position physique du module photovoltaïque 1 dans un champ photovoltaïque. Le dispositif de traitement 6 peut être également électriquement alimenté par le courant électrique généré par le module photovoltaïque 1.

Lorsque plusieurs modules photovoltaïques selon l'invention sont installés sur un site d'implantation, les signaux d'entrée d'un module photovoltaïque 1 particulier comprennent l'ensemble des signaux de sortie de chacun des autres modules photovoltaïques selon l'invention installés sur le site.

Le dispositif de télécommunications 4 peut, par exemple, être conçu pour mesurer une caractéristique de chaque signal d'entrée reçu, dans ce mode de réalisation la puissance de chaque signal d'entrée reçu : la puissance mesurée est également transmise au dispositif de traitement 6 qui est alors en mesure de déterminer la distance de la source du signal d'entrée lorsque sa puissance d'émission est connue. Ainsi, lorsqu'un signal d'entrée reçu par le module photovoltaïque 1 émane d'un autre module photovoltaïque selon l'invention, les moyens de traitement sont en mesure de déterminer la distance séparant les deux modules photovoltaïques en comparant la puissance reçue avec la puissance d'émission connue.

Selon un deuxième mode de réalisation, non représenté sur les Figures, les moyens de télécommunications comportent une ligne électrique destinée à relier au moins une partie des modules photovoltaïques. Les modules photovoltaïques sont alors reliés les uns aux autres par un montage en série. Dans ce mode de réalisation, les moyens de télécommunications comportent des moyens de transmission et/ou de réception d'impulsions électromagnétiques, par exemple, en utilisant la technologie de courants porteurs en ligne (CPL). Les impulsions électriques sont transmises sur ladite ligne électrique et la caractéristique mesurée par les moyens de traitement est, par exemple, l'atténuation de chaque signal d'entrée reçu. Les coordonnées attribuées sont, dans un tel mode de réalisation, des coordonnées curvilignes dudit module photovoltaïque sur la ligne électrique.

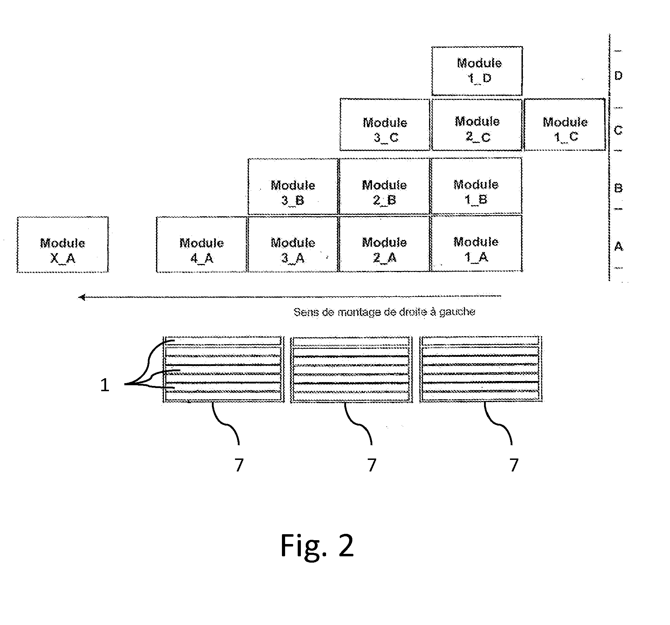

Les modules photovoltaïques selon l'invention sont destinés à équiper un champ photovoltaïque selon l'invention où la répartition des différents modules est faite sensiblement selon une matrice telle que représentée à la Figure 2. En communiquant, chaque module photovoltaïque selon l'invention détermine la distance relative qui le sépare au moins des modules photovoltaïques adjacents.

A partir des différentes distances et des différents identifiants uniques reçus, les moyens de traitement d'un module photovoltaïque 1 peuvent déterminer ses coordonnées (x, y) - x représentant le numéro de colonne matricielle et y la rangée - en appliquant par exemple l'algorithme suivant :
- Si aucune distance n'a pu être déterminée, le dispositif de traitement attribue les coordonnées (x₀, y₀) ;
- Si une seule distance est déterminée, correspondant à la distance avec un autre module photovoltaïque ayant des coordonnées attribuées (xi, yi), les moyens de traitement attribuent les coordonnées (xi+1 ; yi) ;
- Si au moins deux distances sont déterminées :
   Les moyens de traitement classent chaque distance déterminée et parmi les autres modules photovoltaïques situés à la plus courte distance classée, déterminer les coordonnées (xi, yi) de l'autre module photovoltaïque situé dans la colonne de plus faible numéro puis :
      - si un module de coordonnée (xi+1, yi-1) existe et si la distance d_{xi,yi} = d_{xi+1,yi-1} alors les moyens de traitement attribuent les coordonnées (xi+1, yi) au module photovoltaïque 1 ;
         sinon, si un module de coordonnées (xi, yi-1) existe et si la distance d_{xi,yi-1} > d_{xi,yi} alors les moyens de traitement attribuent les coordonnées (xi, yi+1) sinon les moyens de traitement attribuent les coordonnées (xi+1, yi).
         Si aucune coordonnée ne peut être déterminée ou si les coordonnées déterminées sont déjà attribuées, alors les moyens de traitement attribuent une valeur (0,0) signifiant que des coordonnées ne sont pas attribuables ou qu'il existe un conflit entre plusieurs modules photovoltaïques.

De façon pratique, lors de l'installation d'un champ photovoltaïque selon l'invention, les modules photovoltaïques sont livrés par exemple sur des palettes 7, représentée à la Figure 2 et ne reçoivent pas de rayonnement lumineux, de façon à se que le dispositif de télécommunications 4 et le dispositif de traitement 6 de chaque module photovoltaïque 1 n'est pas électriquement alimenté.

Dès qu'un module photovoltaïque est sorti de son emballage, il reçoit un rayonnement solaire et génère assez d'énergie électrique pour que les dispositifs 4, 6 se mettent en fonction. Dès lors, le dispositif de télécommunications 4 est conçu pour émettre un signal de sortie encodant un identifiant unique attribué lors de sa fabrication, tel qu'un numéro de série. Après émission de cet identifiant, les moyens de télécommunications 4 se mettent en mode réception et récupèrent les données d'identifications des modules photovoltaïques selon l'invention situées aux alentours et déjà installées. Ces données d'identifications comprennent les identifiants uniques et les coordonnées déjà attribuées. En mode réception, le dispositif de télécommunications 4 mesure la puissance de réception de chaque signal d'entrée.

Lorsqu'un opérateur procède à l'installation du champ photovoltaïque représenté à la Figure 2, il dispose les modules photovoltaïques selon un sens de montage prédéterminé, par exemple de droite à gauche. Les coordonnées sont alors notées x_A où x représente un chiffre indiquant la colonne où se situe le module photovoltaïque 1 et A une lettre indiquant la rangée dudit module.

Premier cas : un seul module photovoltaïque 1 est sorti de son emballage et tous les autres modules restent confinés : il ne reçoit aucune donnée d'identification venant d'autre module : les moyens de traitement attribuent alors les coordonnées 1_A.

Deuxième cas : Plusieurs modules photovoltaïques sont sortis de leur emballage et sont sous rayonnement solaire. Les modules photovoltaïques reçoivent alors des données d'identification provenant d'autres modules solaires et tous les modules photovoltaïques en fonction peuvent prétendre à avoir la position 1_A: l'opérateur doit alors intervenir et activer des moyens d'initialisation pour attribuer les coordonnées 1_A à un premier module photovoltaïque choisi.

Les moyens d'initialisation peuvent être, par exemple, activés par une pression sur un bouton (non représenté) du module photovoltaïque 1 disposé à cet effet, ou bien grâce à un cache disposé sur une partie des cellules photovoltaïques 2 du module photovoltaïque 1, selon une séquence prédéfinie : une telle séquence peut être, par exemple, une application d'un cache suivi de son retrait, ceci éventuellement plusieurs fois de suite, sur au moins une partie d'une cellule photovoltaïque 2 ou d'une pluralité de cellules photovoltaïques 2. De façon alternative, l'opérateur peut installer préalablement une balise de télécommunications émettant un identifiant et des coordonnées figées à 0_A reconnues par les moyens de traitement comme information de discrimination permettant d'attribuer la position 1_A par recoupement avec la distance relative à cette balise de télécommunications.

Alternativement, un module photovoltaïque 1 prédéterminé peut avoir des coordonnées 1_A attribuées lors de sa fabrication. Un tel module photovoltaïque est alors physiquement identifiable par un opérateur.

Une fois le premier module photovoltaïque positionné et ses coordonnées 1_A attribuées, les autres modules sont installés successivement :

Le prochain module photovoltaïque recevant l'information émise par le module photovoltaïque émettant des coordonnées 1_A s'attribue les coordonnées 2_A. De même, le module photovoltaïque suivant mesure une distance de réception du signal émis par le module photovoltaïque ayant les coordonnées 2_A plus forte que le module photovoltaïque ayant les coordonnées 1_A et se détermine comme ayant les coordonnées 3_A. Les coordonnées des modules d'une même rangée sont déterminées de proche en proche, de la même façon.

Une fois la première rangée achevée, l'opérateur procède à l'installation du premier module photovoltaïque de la deuxième rangée. Ce module détermine que le module ayant les coordonnées 1_A est plus proche que le module ayant les coordonnées 2_A lui-même plus proche que le module ayant les coordonnées 3_A. Il s'attribue alors les coordonnées 1_B, aucun autre module n'ayant des coordonnées x_B.

Pour les modules photovoltaïques suivant de la rangée B, le protocole de détermination des coordonnées est semblable au protocole décrit pour la rangée A.

Avantageusement, les informations d'identification de chaque module photovoltaïque 1, incluant les coordonnées déterminées, peuvent être communiquées à une base de centralisation (non représentée sur les Figures). Une telle base de centralisation peut ensuite permettre la consultation des informations d'identification, notamment des coordonnées associées à chaque identifiant unique de chaque module photovoltaïque du champ photovoltaïque. La consultation des informations d'identification communiquées à la base de centralisation peut être effectuée, par exemple, grâce à un ordinateur ou un système de visualisation pour repérer visuellement les modules photovoltaïques du champ photovoltaïque. Par ailleurs, la base de centralisation peut éventuellement communiquer avec un module photovoltaïque 1, en utilisant ses coordonnées.

Ainsi, un module photovoltaïque selon l'invention décrit ci-dessus permet d'installer un champ photovoltaïque selon l'invention dans lequel chaque module photovoltaïque s'attribue des coordonnées représentatives de sa position physique au sein du champ photovoltaïque sans qu'un opérateur n'ait à procéder à des manipulations sur chaque module photovoltaïque installé.

Bien entendu, les exemples de réalisations évoqués ci-dessus ne présentent aucun caractère limitatif et d'autres détails et améliorations peuvent être apportés à un module photovoltaïque selon l'invention, sans pour autant sortir du cadre de l'invention où d'autres formes de module photovoltaïque peuvent être réalisées.

## Revendications

1. Module photovoltaïque (1) comprenant :
- des moyens de télécommunications (4) conçus pour recevoir au moins un signal d'entrée provenant d'au moins une source émettant des données d'identification et émettre au moins un signal de sortie encodant au moins des informations d'identification ;
- des moyens de traitement (6) de chaque signal d'entrée agencés pour identifier chaque source et pour attribuer au module photovoltaïque (1) des coordonnées (x, y) représentatives de la localisation dudit module photovoltaïque (1) au sein d'un site d'implantation comportant une pluralité de modules photovoltaïques semblables disposés selon un arrangement ou matrice à au moins deux dimensions, les coordonnées comprenant au moins une première coordonnée (x) représentative d'un rang du module selon une première dimension de l'arrangement et une seconde coordonnée (y) représentative d'un rang du module selon une seconde dimension de l'arrangement ou matrice ;
les moyens de traitement étant agencés pour :
- mesurer une caractéristique de chaque signal d'entrée reçu afin de déterminer la distance entre ledit module et chaque source identifiée ;
- attribuer des coordonnées (x, y) au module, en fonction des distances des sources identifiées et d'un ensemble de caractéristiques de chaque signal d'entrée comprenant au moins les données d'identification de chaque source identifiée et les coordonnées (x,y) des sources identifiées.

2. Module photovoltaïque (1) selon la revendication 1, dans lequel les coordonnées (x, y) déterminées par les moyens de traitement sont encodées dans les informations d'identification dudit module.

3. Module photovoltaïque (1) selon l'une des revendications précédentes, comprenant en outre des moyens d'initialisation conçus pour attribuer des coordonnées initiales (x0, y0) prédéterminées audit module.

4. Module photovoltaïque (1) selon la revendication 3, dans lequel les moyens d'initialisation sont agencés pour attribuer des coordonnées initiales (x0, y0) prédéterminées lorsque le signal d'entrée dudit module ne comporte pas de données d'identification provenant d'une source identifiée.

5. Module photovoltaïque (1) selon l'une des revendications précédentes, dans lequel chaque signal d'entrée et/ou chaque signal de sortie est un signal radioélectrique HF, VHF, UHF ou SHF.

6. Module photovoltaïque (1) selon l'une des revendications précédentes, comprenant en outre des moyens de stockage des coordonnées (x, y), notamment une mémoire non volatile.

7. Champ photovoltaïque comprenant une pluralité de modules photovoltaïques conformes à l'une des revendications précédentes, disposés selon un arrangement ou matrice à au moins deux dimensions.

8. Champ photovoltaïque selon la revendication 7, dans lequel dans lequel les informations d'identification de chaque module photovoltaïque (1) constituent des données d'identification pour chaque autre module photovoltaïque.

9. Procédé d'attribution de coordonnées (x, y) à un module photovoltaïque (1) selon l'une des revendications 1 à 6 représentatives de sa localisation au sein d'un arrangement ou matrice de modules photovoltaïques (1) à au moins deux dimensions., les coordonnées comprenant au moins une première coordonnée (x) représentative d'un rang du module selon une première dimension de l'arrangement et une seconde coordonnée (y) représentative d'un rang du module selon une seconde dimension de l'arrangement ou matrice, comprenant les étapes suivantes :
a) réceptionner au moins un signal d'entrée provenant d'au moins une source identifiée jouxtant ledit module photovoltaïque (1) et déterminer les données d'identification de ladite source identifiée ;
b) mesurer une caractéristique de chaque signal d'entrée reçu afin de déterminer chaque distance entre ledit module et chaque source identifiée,
c) attribuer des coordonnées (x, y) au module, en fonction des distances des sources identifiées et d'un ensemble de caractéristiques de chaque signal d'entrée comprenant au moins les données d'identification de chaque source identifiée et les coordonnées (x,y) des sources identifiées.

10. Procédé d'attribution de coordonnées (x, y) à un module photovoltaïque (1) selon la revendication 9, dans lequel l'étape c) d'attribution des coordonnées (x, y) au module photovoltaïque (1) comprend, dans le cas ou au moins deux sources correspondant à d'autres modules photovoltaïques sont repérées, une détermination des coordonnées (xi, yi) du module photovoltaïque parmi les autres modules photovoltaïques situés à la plus courte distance et disposé au rang le plus faible selon la première dimension de l'arrangement ou matrice.

11. Procédé d'attribution de coordonnées (x, y) à un module photovoltaïque (1) selon la revendication 10, dans lequel :
- si un module photovoltaïque de coordonnée (xi+1, yi-1) est détecté à une distance sensiblement égale à celle du module de coordonnées (xi, yi) situé dans la colonne de plus faible numéro parmi les autres modules photovoltaïques situés à la plus courte distance classée, alors les moyens de traitement attribuent les coordonnées (xi+1, yi) au module photovoltaïque (1) ;
- sinon :
- si un module photovoltaïque de coordonnée (xi, yi-1) est détecté à une distance supérieure au module de coordonnées (xi, yi) situé dans la colonne de plus faible numéro parmi les autres modules photovoltaïques situés à la plus courte distance classée, alors les moyens de traitement attribuent les coordonnées (xi, yi+1) au module photovoltaïque (1) ;
- sinon, les moyens de traitement attribuent les coordonnées (xi+1, yi) au module photovoltaïque

12. Procédé selon l'une des revendications 9 à 11, dans lequel si une seule source est détectée, correspondant ayant des coordonnées attribuées (xi, yi), les moyens de traitement attribuent les coordonnées (xi+1 ; yi) au module photovoltaïque (1) ;

13. Procédé selon l'une des revendications 9 à 12, comprenant une étape d'initialisation consistant à attribuer des coordonnées initiales (x0, y0) à un module photovoltaïque.

14. Procédé selon la revendication 13, dans lequel l'étape d'initialisation est constituée par le fait que si aucune source n'a pu être détectée, le dispositif de traitement attribue les coordonnées par défaut correspondant à un premier module photovoltaïque du champ photovoltaïque (x0, y0) ;

15. Procédé selon la revendication 13, dans lequel l'étape d'initialisation est effectuée avec une balise de télécommunications.
